(19) Europäisches Patentamt
European Patent Office
Office européen des brevets

(11) **EP 1 884 755 A2**

(12) **EUROPÄISCHE PATENTANMELDUNG**

(43) Veröffentlichungstag:
**06.02.2008 Patentblatt 2008/06**

(51) Int Cl.:
***G01J 1/42*** *(2006.01)*

(21) Anmeldenummer: 07008163.3

(22) Anmeldetag: **21.04.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **31.07.2006 DE 102006035657**

(71) Anmelder: **Ivoclar Vivadent AG**
**9494 Schaan (LI)**

(72) Erfinder:
• **Plank, Wolfgang**
  **6830 Rankweil (AT)**
• **Senn, Bruno**
  **9470 Buchs (CH)**

(74) Vertreter: **Baronetzky, Klaus et al**
**Splanemann Reitzner**
**Baronetzky Westendorp**
**Patentanwälte**
**Rumfordstrasse 7**
**80469 München (DE)**

(54) **Lichtmessvorrichtung**

(57)      Die Erfindung betrifft eine Lichtmessvorrichtung 34, mit einer Lichtquelle, an die eine Lichtleitvorrichtung 24 angeschlossen ist, wobei die Lichtleitvorrichtung 24 lichtausgangsseitig eine Lichtaustrittsfläche 30 aufweist und die Lichtmessvorrichtung 34 eine Lichtsensoranordnung 36 und einen Anschlag für die Anlage der Lichtleitvorrichtung 24 aufweist. Die Lichtsensoranordnung 36 weist mindestens zwei Sensoren (40a, 40b, 40c,....40o) auf, die von Licht aus der Lichtaustrittsfläche 30 beaufschlagbar sind.

Fig. 1

EP 1 884 755 A2

**Beschreibung**

Eine Lichtmessvorrichtung, mit welcher die Kombination aus einer Lichtquelle und einer Lichtleitvorrichtung wie einem Lichtleitkabel gemessen wird, ist beispielsweise aus der DE-A1 39 29 562 bekannt. Bei dieser Prüfeinrichtung für Endoskopausrüstungen wird das von einer Lichtquelle ausgesendete Licht teils unmittelbar und teils mittelbar, also über die Lichtleitvorrichtung, einer Lichtsensoranordnung mit zwei Sensoren zugeleitet. Das Erfassungsergebnis der beiden Sensoren wird in Beziehung zu einander gesetzt und ausgewertet, um die einwandfreie Funktion des dortigen Endoskops sicherstellen zu können.

Lichtmessvorrichtungen sind in zahlreichen Ausgestaltungen bekannt geworden. So ist beispielsweise bereits aus der DE-A1 42 11 230 eine Kalibriervorrichtung für das dortige Lichthärtgerät bekannt, die verhindern soll, dass durch unzureichende Lichtabgabe eine lediglich partielle Härtung des zu polymerisierendem Dentalrestaurationsprodukts erfolgt. Aus der DE-C2 198 10 573 ist die Kalibrierung eines Lichthärtgeräts bekannt, wobei die elektrischen Parameter der Lichtquelle für die Kalibrierung ausgenutzt werden.

Schließlich ist es aus der DE-GM 92 12 892 bekannt, einen Lichtleistungsdetektor an einem Lichthärtgerät anzubringen, der mit einer Auswerteschaltung verbunden ist. Bei dieser Lösung wird kurzerhand ein Signal abgegeben, wenn die Lichtleistung größer als ein vorgegebener Schwellenwert ist.

Ferner ist es bereits vorgeschlagen worden, einen Sensor zu realisieren, der einen kleinerer Durchmesser als die Lichtleitvorrichtung und deren Lichtaustrittsfläche hat. Hierdurch soll die Lichtmessung bei allen vorkommenden Durchmessern von Lichtleitvorrichtungen unterschiedslos möglich sein. Nachteilig hierbei ist, dass bei einem Lichtleiter mit einem größerem Lichtdurchmesser dann nur ein prozentual geringerer Anteil der abgegebenen Lichtleistung erfasst wird. Daher ist diese Lösung nur für Lichthärtgeräte geeignet, die einen im Wesentlichen gleichen Durchmessers des Lichtleiters aufweisen.

Demgegenüber liegt der Erfindung die Aufgabe zugrunde, einen Lichtmessvorrichtung gemäß dem Oberbegriff von Anspruch 1 zu schaffen, die universeller verwendbar ist und insbesondere eine zuverlässige Bestimmung erlaubt, ob die tatsächlich abgegebene Lichtleistung ausreichend ist oder nicht.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, dass die erfindungsgemäße Lichtsensoranordnung in besonderer Weise ausgebildet ist. Sie weist zwei Sensoren auf, die von Licht aus der Lichtaustrittsfläche beaufschlagbar sind. Die Lichtaustrittsfläche ist am vorderen Ende der Lichtleitvorrichtung ausgebildet, so dass das dort emittierte Licht der Lichtleistung der an die Lichtleitvorrichtung angeschlossenen Lichtquellen entspricht.

Erfindungsgemäß wird insofern die für die Lichthärtung zur Verfügung stehende Lichtleistung gemessen, und zwar erfindungsgemäß unabhängig davon, ob eine Lichtleitvorrichtung einen großen Querschnitt oder eine Lichtleitvorrichtung mit einem kleinen Querschnitt eingesetzt wird.

Durch den Einsatz einer Mehrzahl von Sensoren, die aber im Einzelfall auch auf lediglich zwei Sensoren reduziert werden können, lässt sich sicherstellen, dass die Anzahl der beaufschlagten Sensoren mit dem Durchmesser der Lichtleitvorrichtung korliert ist. Bevorzugt wird hierzu ein Schwellenwert für beaufschlagte und nicht beaufschlagte Sensoren vorgegeben, der beispielsweise durch die berechnete halbe Lichtstärke der maximal gemessen Lichtstärke vorgegeben sein kann.

Wenn die gemessene Lichtstärke geringer als der Schwellenwert ist, wird davon ausgegangen, dass der Durchmesser der Lichtaustrittsfläche so gering ist, dass er den betreffenden Lichtsensor nicht abdeckt.

Beispielsweise können 8, 16, 64 oder sogar 256 Lichtsensoren nebeneinander angeordnet sein. Bei kreisringförmiger Lichtaustrittsfläche lässt sich aus der Anzahl der beleuchteten Sensoren im Vergleich zur Gesamtanzahl der Durchmesser und damit die wirksame Fläche der Lichtleitvorrichtung ermitteln. Bekanntlich ergibt sich die Fläche A

$$A = o/4 \ * \ D^2,$$

wobei D der Durchmesser ist.

Der insofern erfindungsgemäß gemessene Durchmesser ergibt sich zwischen den je äußersten noch mit Licht beaufschlagten Sensoren, oder ggf. - bei Verwendung eines Anschlags - über die Strecke zwischen dem ersten Sensor und dem letzten noch mit Licht beaufschlagten Sensor.

Unter Lichtleitvorrichtung sei hier eine beliebige geeignete Lichtleitvorrichtung eines Lichthärtgeräts verstanden. Hierzu gehören Lichtleitstäbe mit im Gerät angeordneten Lichtleitern, aber auch Lichtleitvorrichtungen für an der Spitze eines Führungsstabs des Lichthärtgeräts angeordnete Lichtquellen, wozu beispielsweise Sammellinsen, Reflektoren und Abdeckungen gehören. Den Lichtleitvorrichtungen ist gemeinsam, dass an einer bestimmten Stelle, die von der eigentlichen Lichtquelle beabstandet ist - sei es nur um Bruchteile von Millimetern - das Licht einen optischen wirksamen Körper verlässt und in die Umgebungsluft eintritt.

Erfindungsgemäß besonders günstig ist es, dass durch kombinierte Messung sowohl des Durchmessers als auch der je abgegebenen Lichtstärke die gesamte für die Lichthärtung zur Verfügung stehende Lichtleistung ermittelbar ist.

Erfindungsgemäß wird so auch unterschiedlichen Verteilungen der Lichtleistungen, je nach der verwendeten Optik Rechnung getragen. Beispielsweise kann die Lichtleistung an dem Außenumfang des Lichtleiters besonders stark sein, so dass die Lichtstärke an dem vorderen und hinteren Ende der Lichtaustrittsfläche besonders hoch ist. Wenn nun eine punktuelle Messung an einer beliebigen Stelle vorgenommen wird, vermag diese die Lichtleistung nicht in zutreffender Höhe zu erfassen. Durch die keilförmige Sensoranordnung lässt sich die Gesamtleistung erfassen und ermitteln, aber auch gezielt die Verteilung der Lichtleistung erfassen.

Erfindungsgemäß besonders günstig ist es auch, dass die Lichtleistung pro cm$^2$ automatisch ermittelbar ist, denn sowohl die abgegebenen Gesamtleistung als auch die Fläche lässt sich mit der erfindungsgemäßen Lichtmessvorrichtung bestimmen. Dieser Wert ist entscheidend für die Durchhärtung eines zu polymerisierenden Dentalrestaurationsteils.

Erfindungsgemäß ist es damit ohne weiteres möglich, die mit zunehmenden Durchmesser der Lichtleitvorrichtung oder des Lichtleitstabes sich reduzierende spezifische Lichtleistung zu kompensieren. Unter spezifischer Lichtleistung sei hier die Lichtleistung pro Fläche zu verstehen.

Anstelle der Verwendung eines Anschlags ist es auch möglich, einen elektronischen Anschlag zu verwenden. Das Band der Lichtsensoren ist jedenfalls länger als der maximal vorkommende Durchmesser der Lichtaustrittsfläche, die gemessen werden soll. Wenn die Lichtaustrittsfläche nun mit ihrem maximalen Durchmesser auf die Lichtsensoranordnung gehalten wird, lässt sich der Durchmesser der Lichtaustrittsfläche bestimmen. Bei einer kreisförmigen Lichtaustrittsfläche kann aber eine leichte Abweichung, beispielsweise auch eine leicht Schrägstellung, zu Messfehlern führen.

Um dies zu verhindern, ist es gemäß einer vorteilhaften Ausgestaltung vorgesehen, dass die Lichtaustrittsfläche quer über das Band der Sensoren, also die Lichtsensoranordnung, geführt wird und die maximale Erstreckung der beleuchteten Fläche elektronisch erfasst und damit der Durchmesser der Lichtaustrittsfläche bestimmt wird.

Auch wenn hier kreisförmige Lichtaustrittsflächen in erster Linie geprüft werden sollen, versteht es sich, dass auch quadratische Lichtaustrittsflächen oder beliebige andere Formen von Lichtaustrittsflächen prüfbar sind, wobei hierfür dann zweckmäßig eine entsprechende Einstellung der Lichtmessvorrichtung vorgesehen ist.

Bei der vorstehend erläuterten Führung der Lichtaustrittsfläche über die Lichtsensoranordnung ist aber auch eine gesteuerte Erfassung der Form möglich, die dann in der Auswerteschaltung entsprechend berücksichtigt werden kann.

In besonders günstiger Ausgestaltung der Erfindung ist es vorgesehen, dass die Sensoranordnung nach der Art einer ausgesprochen schmalen Zeile ausgebildet ist. Dies ermöglicht es, auch bei ganz geringen Durchmessern der Lichtleitvorrichtung eine schmalbandige Messung vorzunehmen, also insbesondere Randunschärfungen aufgrund der Krümmung des Lichtleiters an den Rändern zu vermeiden.

In vorteilhafter Ausgestaltung ist in diesem Zusammenhang vorgesehen, die Lichtleitvorrichtung an einer Zentrierhilfe als Anschlag anzulegen. Hiermit ist sichergestellt, dass der maximale Durchmesser erfasst wird und nicht anstelle dessen eine beliebige andere Sekante.

Erfindungsgemäß besonders günstig ist es, wenn die Lichtsensoranordnung eine schlitzförmige Maske aufweist, die die wirksame Breite der Sensoren je deutlich reduziert. Hierdurch lassen sich Messfehler weiter reduzieren, und die Verfälschung des Messergebnisses durch einen seitlichen Lichteinfall wird verhindert.

In weiterer vorteilhafter Ausgestaltung ist es vorgesehen, die einzelnen Sensoren durch schmale und lichtundurchlässige Stege voneinander zu trennen, so dass kein Lichtübertritt zwischen zwei einander benachbarten Sensoren möglich ist.

Gemäß einer weiteren vorteilhaften Ausgestaltung der Erfindung ist es vorgesehen, dass eine vorgefertigte Lichtsensoranordnung, insbesondere mit einer durchsichtigen Abdeckung, in die Lichtmessvorrichtung eingebaut ist.

Gemäß einer weiteren vorteilhaften Ausgestaltung der Erfindung ist es vorgesehen, dass die Lichtmessvorrichtung einen Anschlag für die Anlage der Lichtleitvorrichtung aufweist.

Gemäß einer weiteren vorteilhaften Ausgestaltung der Erfindung ist es vorgesehen, dass die Lichtsensoranordnung Lichtsensoren aufweist, die in einer Reihe angeordnet sind, und dass die Längserstreckung der Reihe größer als der Durchmesser der größten vorkommenden Lichtaustrittfläche ist.

Gemäß einer weiteren vorteilhaften Ausgestaltung der Erfindung ist es vorgesehen, dass die Lichtaustrittsfläche bei frei an den Anschlag angelegter Lichtleitvorrichtung mindestens einen Lichtsensor abdeckt.

Gemäß einer weiteren vorteilhaften Ausgestaltung der Erfindung ist es vorgesehen, dass die Lichtaustrittsfläche im Wesentlichen kreisförmig ausgebildet ist und die Lichtsensoren eine Breite aufweisen, die kleiner als die kleinste vorkommende Lichtaustrittsfläche ist und insbesondere unmittelbar aneinander angrenzend angeordnet sind.

Gemäß einer weiteren vorteilhaften Ausgestaltung der Erfindung ist es vorgesehen, dass die Lichtsensoranordnung als bandförmige Anordnung von Lichtsensoren, insbesondere zwischen drei und fünfhundert Lichtsensoren, ausgebildet ist.

Gemäß einer weiteren vorteilhaften Ausgestaltung der Erfindung ist es vorgesehen, dass jeder Lichtsensor ein Breiten/Längenverhältnis von mindestens 2:1 und höchstens 20:1, bevorzugt von etwa 5:1 aufweist.

Gemäß einer weiteren vorteilhaften Ausgestaltung der Erfindung ist es vorgesehen, dass die Lichtsensoranordnung eine Länge von mehr als dem 10-fachen des Durchmessers der Lichtaustrittsfläche aufweist.

Gemäß einer weiteren vorteilhaften Ausgestaltung der Erfindung ist es vorgesehen, dass die Abdeckung von einem durchscheinenden oder durchsichtigen Filter abgedeckt ist über ein Filter abgedeckt ist, der die spektrale Empfindlichkeit der Sensoren der Lichtsensoranordnung im Wesentlichen kompensiert.

Gemäß einer weiteren vorteilhaften Ausgestaltung der Erfindung ist es vorgesehen, dass auf einem Filter oder der Abdeckung eine Schutzblende aufgebracht ist, die einen schlitzförmigen Bereich oberhalb der Lichtsensoranordnung freilässt und Bereiche seitlich dieses Bereichs abdeckt.

Gemäß einer weiteren vorteilhaften Ausgestaltung der Erfindung ist es vorgesehen, dass die Lichtaustrittsfläche für unterschiedliche Lichtleitvorrichtungen einsetzbar ist und eine Lichtleitvorrichtung mit einer größeren Lichtaustrittsfläche eine größere Anzahl von Sensoren abdeckt.

Gemäß einer weiteren vorteilhaften Ausgestaltung der Erfindung ist es vorgesehen, dass an einem Lichtsensor ein Diskriminator angeschlossen ist, der ein EIN-Signal abgibt, wenn die erfasste Lichtmenge oberhalb eines vorgegebenen Schwellenwerts ist, und ein AUS-Signal, wenn die Lichtmenge unterhalb des Schwellenwerts ist.

Gemäß einer weiteren vorteilhaften Ausgestaltung der Erfindung ist es vorgesehen, dass eine Auswertschaltung an die Lichtsensoranordnung angeschlossen ist, die ein Verhältnis der von den Lichtsensoren erfassten Lichtmenge zur Anzahl der einander benachbarten und lichtempfangenden Lichtsensoren bildet.

Gemäß einer weiteren vorteilhaften Ausgestaltung der Erfindung ist es vorgesehen, dass die von der Lichtaustrittsfläche abgegebene Lichtleistung basierend auf dem Verhältnis der von den Lichtsensoren über deren Fläche gemessenen Lichtmenge und der gesamte Lichtaustrittsfläche berechnet wird.

Gemäß einer weiteren vorteilhaften Ausgestaltung der Erfindung ist es vorgesehen, dass die Lichtsensoranordnung sowohl die pro Flächeneinheit von der Lichtaustrittsfläche abgegebene Lichtmenge als auch den Durchmesser der Lichtaustrittsfläche misst.

Gemäß einer weiteren vorteilhaften Ausgestaltung der Erfindung ist es vorgesehen, dass die Lichtsensoranordnung nach der Art eines ein- oder mehrzeiligen Balkens ausgebildet ist, an deren einem Ende der Anschlag für die Lichtleitvorrichtung angeordnet ist.

Gemäß einer weiteren vorteilhaften Ausgestaltung der Erfindung ist es vorgesehen, dass über eine Auswerteschaltung die Anzahl der von der Lichtleitvorrichtung beleuchteten Sensoren ermittelt wird und deren durchschnittliche Lichtbeaufschlagung berechnet wird, um die Lichtleistung pro Flächeneinheit einer Lichtquelle zu berechnen.

Weitere Vorteile, Einzelheiten und Merkmale ergeben sich aus der nachfolgenden Beschreibung eines Ausführungsbeispiels anhand eines Beispiels.

Es zeigen:

Fig. 1 eine schematische Ansicht einer erfindungsgemäßen Messvorrichtung, in Kombination mit einem Lichthärtgerät; und

Fig. 2 eine schematische Ansicht einer erfindungsgemäßen Messvorrichtung, in vergrößerter Darstellung.

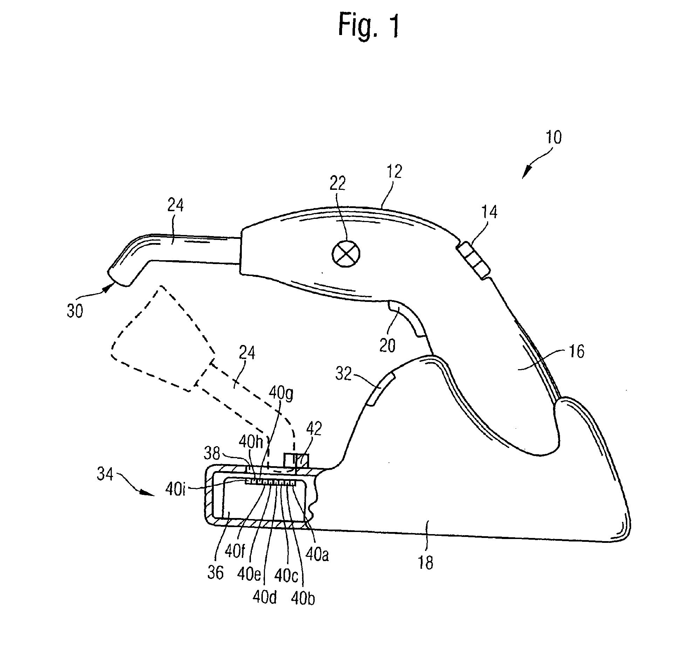

Das in Fig. 1 dargestellte Lichthärtgerät 10 weist ein Gehäuse 12 und eine Anzeigevorrichtung 14 auf, die sich an der Rückseite oben an einem Pistolengriff 16 des Lichthärtgeräts befindet.

Das Lichthärtgerät 10 ist in einer Basisstation 18 absetzbar. Es weist Akkumulatoren auf, die beim Absetzen in der Basisstation 18 automatisch dann aufgeladen werden, wenn der Ladezustand dies erfordert.

Über einen Tastschalter 20, der an der inneren Oberseite des Pistolengriffs 16 in an sich bekannter Weise angeordnet ist, lässt sich das Lichthärtgerät einschalten. In diesem Zustand wird Licht von einer schematisch angedeuteten Lichtquelle 22 abgegeben und teils über einen Reflektor einer Lichtleitvorrichtung 24 zugeleitet.

Die Lichtleitvorrichtung 24 besteht aus einem Rohr, in dem ein Lichtleiter geführt ist. Das vordere Ende der Lichtleitvorrichtung 24 ist abgeköpft, um einen vereinfachten Zugang zu schlecht erreichbaren Stellen zu erzielen, an denen eine Lichthärtung von zu polymerisierendem Material vorgenommen werden muss.

Die Lichtleitvorrichtung endet vorne an einer Lichtaustrittsfläche 30, die beispielsweise auch mit einer durchsichtigen Abdeckung oder ggf. einer Sammellinse versehen sein kann.

Über den Tastschalter 20 ist die Lichtquelle 22 einschaltbar, und im Arbeitsbetrieb wird die Lichtaustrittsfläche 30 in den Mund des Patienten unmittelbar an die Stelle gehalten, die das zu polymerisierende Dentalrestaurationsteil aufweist. Über die Anzeigevorrichtung 14 wird signalisiert, wann der Polymerisationsvorgang abgeschlossen ist.

Nach Beendigung des Härtvorgangs wird das Handstück des Lichthärtgeräts 10 regelmäßig wieder in die Basisstation 18 eingesetzt und dort werden über elektrische Kontakte Akkumulatoren aufgeladen, die im oder am Pistolengriff 16 des Lichthärtgeräts untergebracht sind.

Ein weitere Anzeigevorrichtung 32 und/oder die Anzeigevorrichtung 14 zeigt auch den Ladezustand der Akkumulatoren an und es erfolgt eine Freigabe der Lichthärtung lediglich dann, wenn die verbleibende Energie der Akkumulatoren für die Durchhärtung ebenfalls ausreicht.

Erfindungsgemäß ist es vorgesehen, eine Lichtmessvorrichtung auszubilden, und zwar bevorzugt unmittelbar integriert in die Basisstation 18. Die Lichtmessvorrichtung 34 dient dazu, zu überprüfen, ob auch die optischen Eigenschaften des Lichthärtgeräts 10 - also unabhängig vom Ladezustand der Akkumulatoren - ausreichend sind. Beispielsweise kann über eine Reduktion der Lichtabgabe der Lichtquelle, eine Verschmutzung der dort angebrachten Reflektoren, eine versehentliche Schrägstellung der Lichtleitvorrichtung oder eine Verschmutzung oder sonstige Beschädigung der Lichtaustrittsfläche 30 eine Reduktion der Lichtleistung auftreten, auch wenn die Überprüfung der elektrischen Werte im Lichthärtgerät keine Fehlfunktion erwarten lässt.

Dies lässt sich jedoch erfindungsgemäß mit der Lichtmessvorrichtung 34 überprüfen. Die Lichtmessvorrichtung 34 weist eine Lichtsensoranordnung 36 auf, die sich unterhalb einer horizontalen Fläche der Basisstation 18 erstreckt. Dort weist das Gehäuse der Basisstation 18 eine transparente Abdeckung 38 auf.

Die Lichtsensoranordnung weist eine Vielzahl von Lichtsensoren auf, wobei in Fig. 1 die Lichtsensoren 40a, 40b, 40c, 40d, 40e, 40f, 40g, 40h, 40i, 40j, 40k, 401, 40m, 40n und 40o dargestellt sind. Die Lichtsensoren 40 sind in einer Reihe hintereinander angeordnet. Der Schlitz 38 ist hierbei durch eine transparente Abdeckung verschlossen, so dass die Lichtsensoren gegen Verschmutzung geschützt sind.

Ferner weist die Lichtmessvorrichtung 34 einen Anschlag 42 auf, der sich unmittelbar angrenzend an das untere Ende der Lichtsensoranordnung 36 als Anschlag für die Lichtleitvorrichtung 24 erstreckt. Die Lichtleitvorrichtung 24 ist in gestrichelter Form dort zusätzlich dargestellt. Für das Überprüfen der optischen Eigenschaften wird das Handgerät mit der Lichtleitvorrichtung 24 nach unten gegen den Anschlag 42 gehalten und betätigt. Hierdurch werden die Sensoren 40a, 40b, 4Oc, 40d und 40e mit Licht beaufschlagt, während die Sensoren 40f bis 40o unbeleuchtet verbleiben.

Das Ausgangssignal sämtlicher Lichtsensoren wird erfasst und einer nichtdargestellten Auswerteschaltung zugeführt. Die Auswerteschaltung erfasst sowohl die Intensität der je abgegebenen Strahlung als auch, bei welchem Lichtsensor - hier nach dem Lichtsensor 40e - keine Beleuchtung stattfindet. Aus diesen beiden erfassten Messwerten wird sowohl der Durchmesser der Lichtaustrittsfläche 30 als auch die Stärke der angegebenen Lichtstrahlung - je in Verteilung quer über die Lichtaustrittsfläche 30 ermittelt und an der Anzeigevorrichtung 32 angezeigt.

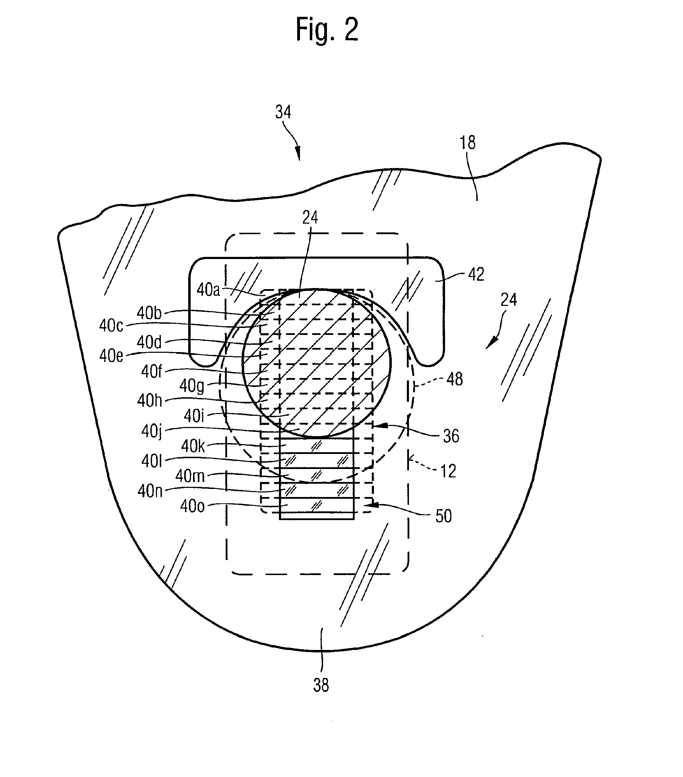

Aus Fig. 2 ist eine entsprechende Lichtmessvorrichtung 34 in vergrößerter Darstellung ersichtlich. Der Anschlag 42 ist zur Lichtleitvorrichtung 24 hin konkav gewölbt und vermag insofern die Lichtleitvorrichtung 24 aufzunehmen, aber auch beispielsweise eine größere Lichtleitvorrichtung 48, die in Fig. 2 gestrichelt dargestellt ist.

wie aus Fig. 2 ersichtlich ist, ist die Abdeckung 38 von einer Breite, die es erlaubt, die kleinste gemessende Lichtleitvorrichtung 24 zu erfassen. Es versteht sich, dass anstelle dessen auch die Breite deutlich reduziert sein kann, beispielsweise auf ein Fünftel der in Fig. 2 dargestellten Breite der Abdeckung 38.

Die Stärke der Abdeckung - und ebenfalls eines hierauf ausgebildeten Filters - ist recht gering, beispielsweise um einen Milimeter. Überprüfungen haben ergeben, dass in diesem Bereich die Strahlausweitung der Lichtleitvorrichtungen gleichmäßig ist, so dass basierend auf dem konstanten Abstand zwischen der Lichtaustrittsfläche und den Sensoren der tatsächliche Durchmesser der Lichtaustrittsfläche ohne weiteres bestimmt werden kann.

Die Lichtsensoren 40a, 40b, 40c, 40d,...40o erstrecken sich eng benachbart nebeneinander und bilden praktisch eine Art Balken. Sie sind wesentlich breiter als hoch, wobei ihre wirksame Breite durch den Schlitz 38 reduziert wird. Sie sind durch schmale und lichtundurchlässige Stege 50 je voneinander getrennt, so dass ein Überstrahlen von benachbarten Lichtsensoren nicht vorkommt.

Es versteht sich, dass anstelle dessen die erfindungsgemäße Lichtmessvorrichtung 34 auch an beliebiger anderer Stelle angebracht sein kann. Beispielsweise kann auch eine zentrale Lichtmessvorrichtung für eine Vielzahl von Lichthärtgeräten 10 realisiert werden, und es ist auch möglich, eine Kodierung des betreffenden Handstücks vorzunehmen, so dass die Lichtmessvorrichtung erfasst, welches Handstück gerade gemessen wird. Bei dieser Ausgestaltung werden bevorzugt die gemessenen Werte erfasst und abgespeichert, und aus einer Verschlechterung der optischen Eigenschaften wird festgestellt, wann damit zu rechnen ist, dass das Lichthärtgerät einer Generalüberholung bedarf.

**Patentansprüche**

**1.** Lichtmessvorrichtung, für eine Lichtquelle, an die eine Lichtleitvorrichtung angeschlossen ist, wobei die Lichtleitvorrichtung lichtausgangsseitig eine Lichtaustrittsfläche aufweist und die Lichtmessvorrichtung eine Lichtsensoranordnung, **dadurch gekennzeichnet, dass** die Lichtsensoranordnung (36) mindestens zwei Sensoren (40a, 40b, 40c,....40o) aufweist, die von Licht aus der Lichtaustrittsfläche (30) beaufschlagbar sind.

2. Lichtmessvorrichtung nach Anspruch 1, **dadurch gekennzeichnet, dass** eine vorgefertigte Lichtsensoranordnung (36), insbesondere mit einer durchsichtigen Abdeckung (38), in die Lichtmessvorrichtung eingebaut ist.

3. Lichtmessvorrichtung nach einem der vorhergehenden Ansprüche, **dadurch gekennzeichnet, dass** die Lichtmessvorrichtung einen Anschlag (42) für die Anlage der Lichtleitvorrichtung (24) aufweist.

4. Lichtmessvorrichtung nach Anspruch 1, **dadurch gekennzeichnet, dass** die Lichtsensoranordnung (36) Lichtsensoren (40a, 40b, 40c,....40o) aufweist, die in einer Reihe angeordnet sind, und dass die Längserstreckung der Reihe größer als der Durchmesser der größten vorkommenden Lichtaustrittfläche (30) ist.

5. Lichtmessvorrichtung nach einem der vorhergehenden Ansprüche, **dadurch gekennzeichnet, dass** die Lichtaustrittsfläche (30) bei frei an den Anschlag (42) angelegter Lichtleitvorrichtung (24) mindestens einen Lichtsensor abdeckt.

6. Lichtmessvorrichtung nach einem der vorhergehenden Ansprüche, **dadurch gekennzeichnet, dass** die Lichtaustrittsfläche (30) im Wesentlichen kreisförmig ausgebildet ist und die Lichtsensoren eine Breite aufweisen, die kleiner als die kleinste vorkommende (40a, 40b, 40c, ....40o) Lichtaustrittsfläche (30) ist und insbesondere unmittelbar aneinander angrenzend angeordnet sind.

7. Lichtmessvorrichtung nach einem der vorhergehenden Ansprüche, **dadurch gekennzeichnet, dass** die Lichtsensoranordnung (36) als bandförmige Anordnung von Lichtsensoren (40a, 40b, 40c,....40o), insbesondere zwischen drei und fünfhundert Lichtsensoren, ausgebildet ist.

8. Lichtmessvorrichtung nach einem der vorhergehenden Ansprüche, **dadurch gekennzeichnet, dass** jeder Lichtsensor (40a, 40b, 40c,....40o) ein Breiten/Längenverhältnis von mindestens 2:1 und höchstens 20:1, bevorzugt von etwa 5:1 aufweist.

9. Lichtmessvorrichtung nach einem der vorhergehenden Ansprüche, **dadurch gekennzeichnet, dass** die Lichtsensoranordnung (36) eine Länge von mehr als dem 10-fachen des Durchmessers der Lichtaustrittsfläche aufweist.

10. Lichtmessvorrichtung nach Anspruch 9, **dadurch gekennzeichnet, dass** die Abdeckung (38) von einem durchscheinenden oder durchsichtigen Filter abgedeckt ist über ein Filter abgedeckt ist, der die spektrale Empfindlichkeit der Sensoren der Lichtsensoranordnung (36) im Wesentlichen kompensiert.

11. Lichtmessvorrichtung nach einem der Ansprüche 9 oder 10, **dadurch gekennzeichnet, dass** auf einem Filter oder der Abdeckung (38) eine Schutzblende aufgebracht ist, die einen schlitzförmigen Bereich oberhalb der Lichtsensoranordnung (36) freilässt und Bereiche seitlich dieses Bereichs abdeckt.

12. Lichtmessvorrichtung nach einem der vorhergehenden Ansprüche, **dadurch gekennzeichnet, dass** die Lichtaustrittsfläche (30) für unterschiedliche Lichtleitvorrichtungen (24) einsetzbar ist und eine Lichtleitvorrichtung (24) mit einer größeren Lichtaustrittsfläche (30) eine größere Anzahl von Sensoren abdeckt.

13. Lichtmessvorrichtung nach einem der vorhergehenden Ansprüche, **dadurch gekennzeichnet, dass** an einem Lichtsensor (40a, 40b, 40c,....40o) ein Diskriminator angeschlossen ist, der ein EIN-Signal abgibt, wenn die erfasste Lichtmenge oberhalb eines vorgegebenen Schwellenwerts ist, und ein AUS-Signal, wenn die Lichtmenge unterhalb des Schwellenwerts ist.

14. Lichtmessvorrichtung nach einem der vorhergehenden Ansprüche, **dadurch gekennzeichnet, dass** eine Auswertschaltung an die Lichtsensoranordnung (36) angeschlossen ist, die ein Verhältnis der von den Lichtsensoren (40a, 40b, 40c,....40o) erfassten Lichtmenge zur Anzahl der einander benachbarten und lichtempfangenden Lichtsensoren (40a, 40b, 40c,....40o) bildet.

15. Lichtmessvorrichtung nach einem der vorhergehenden Ansprüche, **dadurch gekennzeichnet, dass** die von der Lichtaustrittsfläche (30) abgegebene Lichtleistung basierend auf dem Verhältnis der von den Lichtsensoren (40a, 40b, 40c,....40o) über deren Fläche gemessenen Lichtmenge und der gesamte Lichtaustrittsfläche (30) berechnet wird.

16. Lichtmessvorrichtung nach einem der vorhergehenden Ansprüche, **dadurch gekennzeichnet, dass** die Lichtsensoranordnung (36) sowohl die pro Flächeneinheit von der Lichtaustrittsfläche (30) abgegebene Lichtmenge als auch den Durchmesser der Lichtaustrittsfläche (30) misst.

17. Lichtmessvorrichtung nach einem der vorhergehenden Ansprüche, **dadurch gekennzeichnet, dass** die Lichtsensoranordnung (36) nach der Art eines ein- oder mehrzeiligen Balkens ausgebildet ist, an deren einem Ende der Anschlag für die Lichtleitvorrichtung (24) angeordnet ist.

18. Lichtmessvorrichtung nach einem der vorhergehenden Ansprüche, **dadurch gekennzeichnet, dass** über eine Auswerteschaltung die Anzahl der von der Lichtleitvorrichtung (24) beleuchteten Sensoren ermittelt wird und deren durchschnittliche Lichtbeaufschlagung berechnet wird, um die Lichtleistung pro Flächeneinheit einer Lichtquelle zu berechnen.

19. Lichthärtgerät mit einer Lichtquelle, **gekennzeichnet durch** eine Lichtaustrittsfläche (30) mit den Merkmalen eines der vorhergehenden Ansprüche.

Fig. 1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3929562 A1
- DE 4211230 A1

- DE 19810573 C2